# EUROPÄISCHE PATENTSCHRIFT

(11) **EP 3 126 696 B1**
(45) Veröffentlichungstag und Bekanntmachung des Hinweises auf die Patenterteilung: **14.11.2018**
(21) Anmeldenummer: 15716730.5
(22) Anmeldetag: 13.03.2015
(51) Int. Cl.: F16D 28/00

(54) **MODULARES AKTORKONZEPT FÜR KUPPLUNGSAKTOR**
MODULAR ACTUATOR CONCEPT FOR A CLUTCH ACTUATOR
CONCEPT D'ACTIONNEUR MODULAIRE POUR ACTIONNEUR D'EMBRAYAGE

(30) Priorität: 02.04.2014 DE 102014206300
(43) Veröffentlichungstag der Anmeldung: 08.02.2017
(73) Patentinhaber: Schaeffler Technologies AG & Co. KG, 91074 Herzogenaurach (DE)
(72) Erfinder: GREB, Peter, 77833 Ottersweier (DE); MÁN, Lászlo, 77833 Ottersweier-Unzhurst (DE); SCHUMANN, Lars, 77815 Bühl (DE); DREHER, Alexander, 76547 Sinzheim (DE)
(86) Internationale Anmeldenummer: PCT/DE2015/200156
(87) Internationale Veröffentlichungsnummer: WO 2015/149775

(56) Entgegenhaltungen:
- DE-A1- 10 056 004
- DE-A1- 19 832 015
- DE-A1-102004 033 439

## Beschreibung

Bekannt sind elektromechanische und elektrohydraulische Kupplungsaktoriken z.B. für Clutch by Wire (CBW) -Anwendungen.

Hierfür werden gezielt Aktoren der jeweils unterschiedlichen Art (elektromechanisch/ elektrohydraulisch) verwendet, welche jeweils auf den Aktor angepasste Antriebssysteme aufweisen. Hierfür ist entsprechender Aufwand bei der Entwicklung aber auch in anderen Bereichen, wie z.B. in der Konstruktion, Fertigung, Teilebetreuung, Teileverwaltung oder Lagerhaltung notwendig.

So sind beispielsweise aus den Offenlegungsschriften DE 100 56 004 A1,
DE 10 2004 033 439 A1 und DE 198 32 015 A1 jeweils Kupplungsaktoren bekannt, welche zumindest einen Motor und eine entsprechende Betätigungsmechanik zur Kupplungsbetätigung umfassen.

Um den geschilderten Aufwand wenigstens teilweise zu reduzieren wird vorgeschlagen ein und denselben Elektromotor (incl. Elektronik) sowohl für elektromechanische als auch für elektrohydraulische Kupplungsbetätigung zu verwenden. Entsprechend ist dieser E-Motor als Modul für wenigstens die beiden aufgezählten Aktorvarianten vorgesehen.

Hierfür kann ausgenutzt werden, dass der grundsätzliche Energiebedarf zur Betätigung einer Kupplung fast nur von der zu betätigenden Kupplung abhängt und nur zu einem sehr geringen Anteil von der Art der Betätigung/Übertragungsstrecke.

Dieses Motormodul umfasst einen elektromechanischen Linearaktor mit universellem Flansch zur Aufnahme eines Mechanikmoduls und eines Hydraulikmoduls. Beide Module können wahlweise an geflanscht und somit entweder ein elektromechanischer oder ein elektrohydraulischer Aktor komplettiert werden.

Ggf. kann ein universeller Befestigungsflansch an den Modulen vorgesehen werden, an welchem ein konfektionierter Montageadapter für die Befestigung im Kundenbauraum an geflanscht wird. Somit können auch die (relativ komplexen) Modulgehäuse über alle Kundenprojekte identisch sein.

Für das Hydraulikmodul kann evtl. eine Platinenkontatktierung für einen Drucksensor erforderlich sein. Bei der Verwendung des Motormoduls für einen elektromechanischen Aktor wird die dafür vorgesehene Gehäuseöffnung einfach verschlossen.

Ausführungsformen der Erfindung, auf die diese aber nicht beschränkt ist, und aus denen sich weitere erfindungsgemäße Merkmale ergeben können sind in den folgenden Figuren dargestellt. Es zeigen:
- Fig.1: einen elektrohydraulischen Aktor in Modulbauweise mit Motor,
- Fig.2: einen elektromechanischen Aktor in Modulbauweise mit Motor,
- Fig.3: Eine Draufsicht auf den Elektrohydraulischen Aktor gemäß Fig.1
- Fig.4: eine Seitenansicht des elektromechanischen Aktors nach Fig.2
- Fig.5: einen Seitenansicht des Motormoduls,
- Fig.6: eine Draufsicht auf das Motormodul,
- Fig.7: eine Draufsicht des Hydraulikmoduls nach Fig.1
- Fig.8: eine Seitenansicht des Hydraulikmoduls nach Fig.1, und
- Fig.9: eine Seitenansicht des Mechanikmoduls nach Fig. 2.

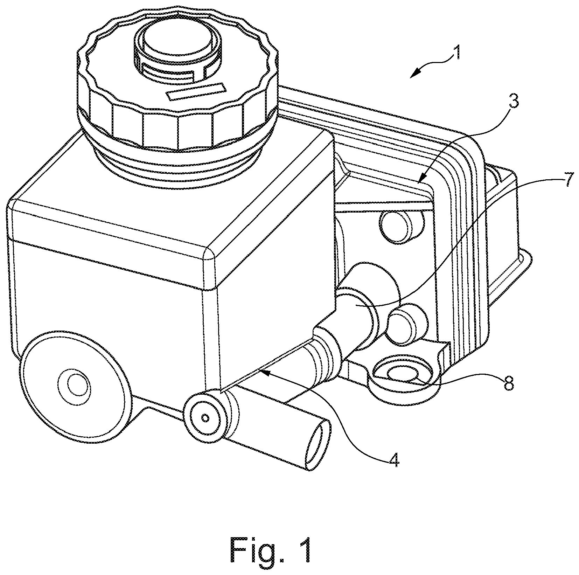

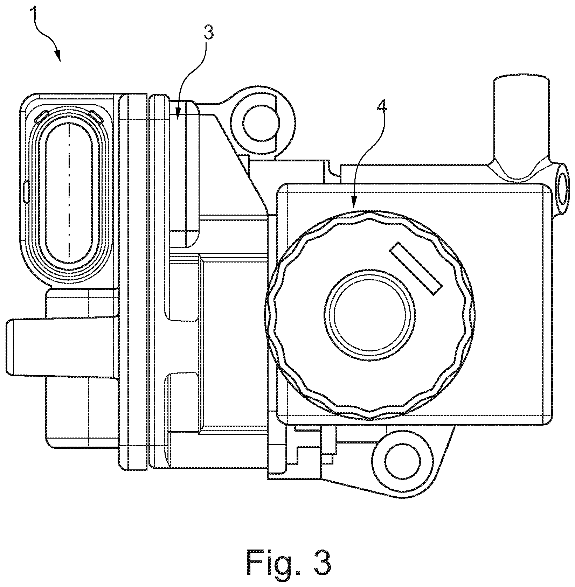

In den Figuren 1 und 3 ist Hydraulikaktor 1 in verschiedenen Ansichten gezeigt. Dieser Hydraulikaktor 1 umfasst wenigstens jeweils das Motormodul 3 und das Hydraulikmodul 4.

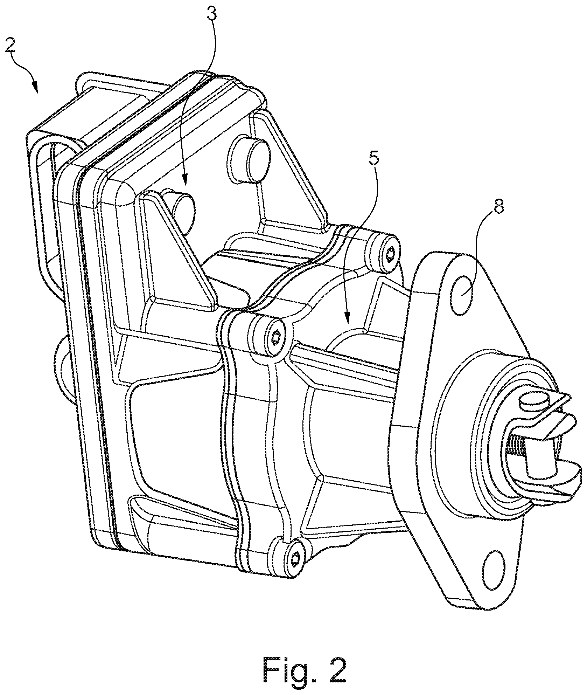

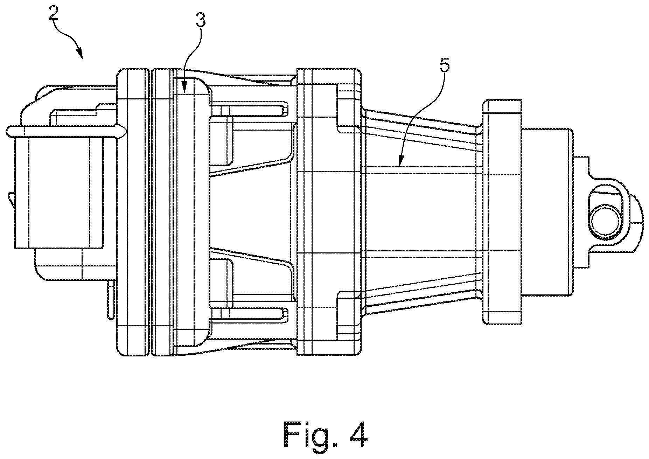

Der Hydraulikaktor 1 wird auch als elektrohydraulischer Aktor bezeichnet und kann über eine hydraulische Strecke einen Nehmerzylinder einer Kupplung zur Betätigung derselben ansteuern. Hierbei kann es sich insbesondere um eine Teilkupplung einer Doppelkupplung handeln. In den Figuren 2 und 4 ist ein Mechanikaktor 2 gezeigt, der auch als elektromechanischer Aktor bezeichnet wird. Dieser umfasst wenigstens das Motormodul 3 und ein Mechanikmodul 5. Bei dem Motormodul 3 handelt es sich um ein Motormodul 3 welches identischen zu dem Motormodul des Hydraulikaktors 1 ist und daher auch mit demselben Bezugszeichen gekennzeichnet wurde.

Der Mechanikaktor 2 kann sowohl als Geberzylinder oder auch direkt als Nehmerzylinder in einer Betätigungsstrecke für eine Kupplung insbesondere einer Teilkupplung einer Doppelkupplung eingesetzt werden. Hier kann er beispielsweise in einer clutch by wire Einrichtung verwendet werden und ein elektronisches Signal in eine Betätigung einer Kupplung umwandeln.

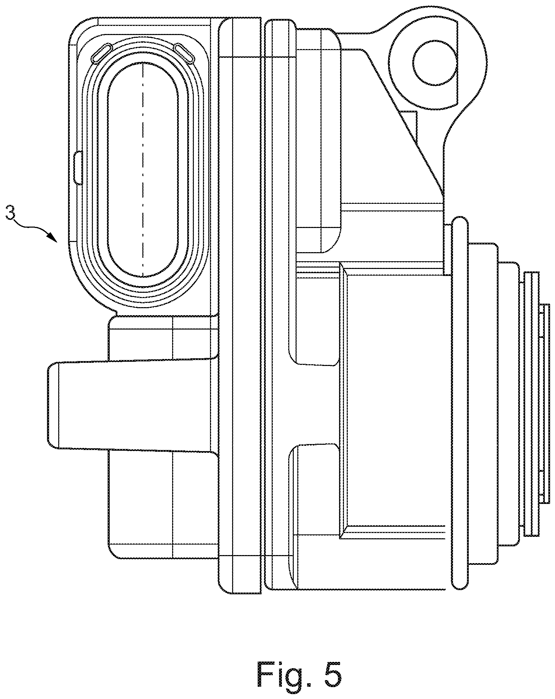

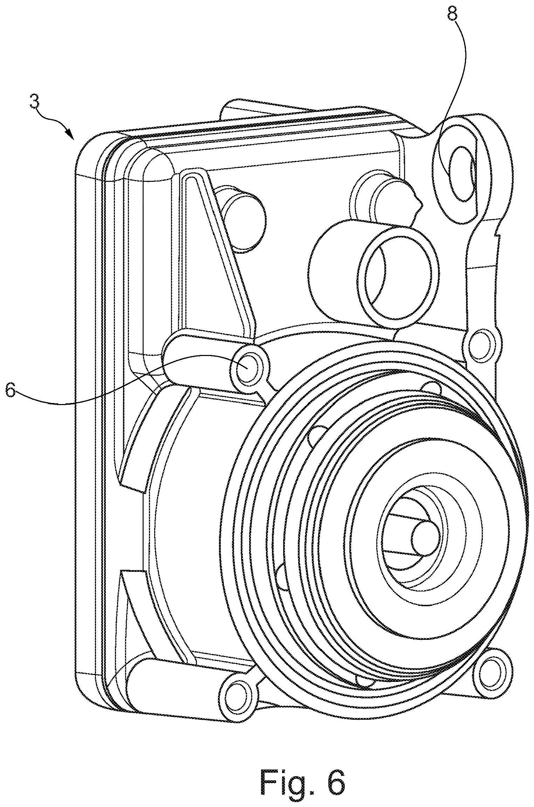

Die Figuren 5 und 6 zeigen das Motormodul 3 ohne weitere angeschlossene Module 2 oder 4. Zu erkennen ist der Gehäuseflansch 6 zum Anschluss Motormoduls 3 wahlweise an ein Hydraulikmodul 4 oder ein Mechanikmodul 5 und der Gehäuseflansch 8 zum Installieren des Motormoduls 3, bzw. des zusammengebauten Hydraulikaktors 1 oder Mechanikaktors 2 in das Getriebegehäuse oder an ein anderes Bauteil eines Kraftfahrzeuges. In Fig. 5 ist außerdem der Elektronikanschluss des Motormoduls 3 erkennbar.

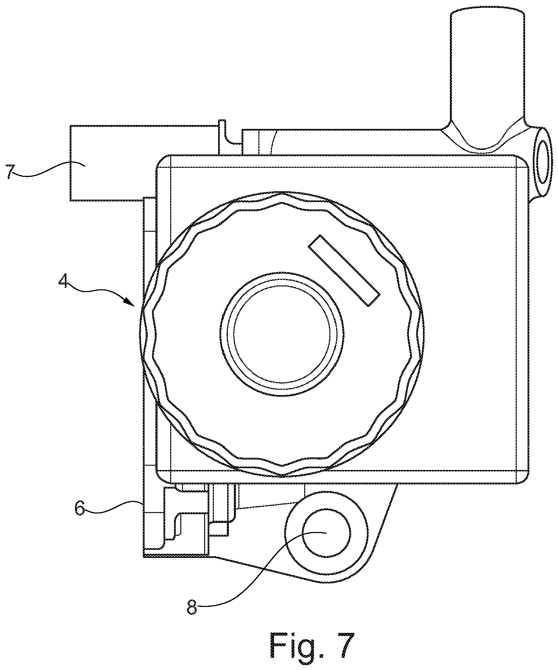

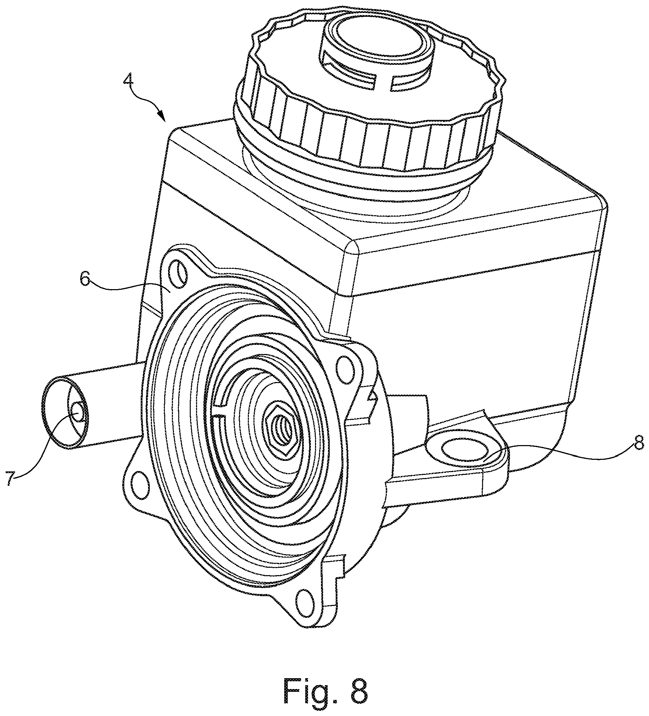

Die Figuren 7 und 8 zeigen unterschiedliche Ansichten des Hydraulikmoduls 4, ohne dass es an das Motormodul 3 angebracht ist. Erkennbar ist neben dem Motorflansch 6 zur Befestigung des Motormoduls 3 noch ein weiterer Gehäuseflansch 8, mit dem der zusammengesetzte Hydraulikaktor 1 an ein Gehäuse/ Getriebegehäuse befestigt werden kann, sowie ein Drucksensor 7, mit dem der Druck in der Hydraulikstrecke gemessen werden kann.

Der Drucksensor 7 wird, wie in Figur 1 erkennbar in eine entsprechende Aufnahme des Motormoduls 3 aufgenommen. Diese Aufnahme ist verschließbar, wenn das Motormodul 3 mit einem Mechanikmodul 5 verbunden wird.

Das Motormodul 3 weist für den Drucksensor 7 außerdem noch Anschlüsse auf, so dass bei eingestecktem Drucksensor 7 automatisch eine Verbindung zur Platine des Motormoduls 3 erstellt wird. Auf diese Weise kann der Drucksensor 7 ausgelesen und der Motor des Motormoduls 3 angetrieben werden.

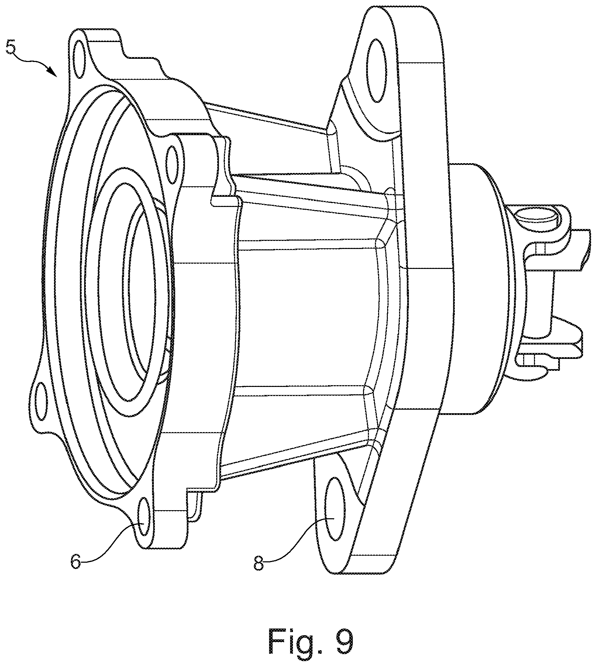

Die Fig. 9 zeigt das Mechanikmodul 5, welches identisch wie oben beschrieben einen Motorflansch 6 zur Verbindung mit dem Motormodul 3 und einen weiteren Gehäuseflansch 8 zur Verbindung mit einem Gehäuse aufweist.

Auf die oben beschriebene Weise wird ein modulares Konzept für einen Aktor zur Kupplungsbetätigung erreicht. Der Aktor umfasst ein Motormodul, welches einen E-Motor und ggf. eine Welle, ggf. noch ein Getriebe umfasst. Über einen Motorflansch 6 des Motormoduls 3 kann dieses wahlweise mit einem Hydraulikmodul 4 oder einem Mechanikmodul 5 verbunden werden, die hierfür entsprechend auch einen Motorflansch 6 aufweisen.

Weitere Kontaktstellen können über Wellen und / oder Getriebe auf Seiten des Motormoduls 3 und / oder des Hydraulik- bzw. Mechnikmoduls 4,5 bereitgestellt sein.

Das Motormodul 3 ist daher für beide Aktorarten, d.h. Hydraulikaktor 1 oder Mechanikaktor 2 identisch. Es weist ferner eine Öffnung zur Aufnahme eines Drucksensors 7 oder auch weiterer oder anderer Sensoren auf, die bei Nichtbedarf verschlossen sind.

Auf diese Weise können kostengünstig und schnell auf einfache Weise unterschiedliche Aktorarten realisiert werden.

Für einen Aktor, insbesondere Kupplungs- und/oder Getriebeaktor wird also ein modulares Konzept vorgeschlagen. Hierfür ist ein E-Motor, über ein Motormodul 3 mit einem universalen Flansch in Form des Motorflansch 6 vorgesehen. Über diesen Flansch 6 kann dann eine elektrohydraulisch- oder elektromechanische Betätigungsstrecke in Form des Hydraulikmoduls 4 oder des Mechanikmoduls 5 angeschlossen werden. Mittels des so entstanden Aktors kann dann eine Kupplung und/oder eine Getriebestelleinrichtung betätigt werden.

Insbesondere für die Verwendung für einen elektrohydraulischen Aktor 1 kann das Motorgehäuse, d.h. das Motormodul 3 noch eine Aufnahme für einen Drucksensor 7 aufweisen. Diese Aufnahme kann verschlossen sein, bzw. für die Verbindung mit einem elektromechanischen Betätigungsteil, d.h. einem Mechanikmodul verschlossen werden.

Nutzbar für einen HZA o.Ä.

### Bezugszeichenliste

1 Hydraulikaktor
2 Mechanikaktor
3 Motormodul
4 Hydraulikmodul
5 Mechanikmodul
6 Motorflansch
7 Drucksensor
8 Gehäuseflansch

## Patentansprüche

1. Aktor zur Kupplungsbetätigung, wobei ein Motormodul (3) und ein Betätigungsmodul (4,5) umfasst werden **dadurch gekennzeichnet, dass** das Betätigungsmodul ein Mechanikmodul (5) oder eine Hydraulikmodul (4) sein kann, und das Motormodul (3) und das Betätigungsmodul (4,5) einen Motorflansch (6) zur wahlweisen Verbindung miteinander aufweisen, so dass das Motormodul (3) wahlweise mit dem Hydraulikmodul (4) oder dem Mechanikmodul (5) verbindbar ist.

2. Aktor nach Anspruch 1, **dadurch gekennzeichnet, dass** das Motormodul und/ oder das Betätigungsmodul (4,5) wenigstens einen Gehäuseflansch (8) zur Verbindung mit einem Gehäuse aufweisen.

3. Aktor nach einem der vorherigen Ansprüche, **dadurch gekennzeichnet, dass** das Motormodul (3) wenigstens eine verschließbare Öffnung zur Aufnahme eines Sensorelementes, vorzugsweise eines Drucksensors (7) aufweist.

4. Aktor nach Anspruch 3, **dadurch gekennzeichnet, dass** die verschließbare Öffnung einen elektrischen Anschluss bereitstellt, das Motormodul wenigstens ein Schaltungselement, vorzugsweise eine Platine aufweist und der elektrische Anschluss eine Verbindung zwischen dem Sensorelement und dem Schaltungselement herstellen kann.

5. Antriebsstrang eines Kraftfahrzeugs, umfassend wenigstens ein Kupplungsagregat mit wenigstens einer Kupplung, **dadurch gekennzeichnet, dass** ein Aktor nach wenigstens einem der Ansprüche 1 bis 4 vorgesehen ist, der die wenigstens eine Kupplung betätigt.

6. Verfahren zur Bereitstellung eines Aktors, vorzugsweise zur Betätigung einer Kupplung, **dadurch gekennzeichnet, dass** ein Motormodul (3) wahlweise mit einem Hydraulikmodul (4) oder einem Mechanikmodul (5) über einen Motorflansch (6) wahlweise zu einem Hydraulikaktor (1) oder einem Mechanikaktor (2) verbunden wird.

## Claims

1. Actuator for clutch actuation, comprising a motor module (3) and an actuation module (4, 5), **characterized in that** the actuation module may be a mechanical module (5) or a hydraulics module (4), and the motor module (3) and the actuation module (4, 5) have a motor flange (6) for selective connection to one another, such that the motor module (3) is selectively connectable to the hydraulics module (4) or to the mechanical module (5) .

2. Actuator according to Claim 1, **characterized in that** the motor module and/or the actuation module (4, 5) have at least one housing flange (8) for connection to a housing.

3. Actuator according to one of the preceding claims, **characterized in that** the motor module (3) has at least one closable opening for receiving a sensor element, preferably a pressure sensor (7).

4. Actuator according to Claim 3, **characterized in that** the closable opening provides an electrical terminal, the motor module has at least one circuitry element, preferably a circuit board, and the electrical terminal can produce a connection between the sensor element and the circuitry element.

5. Drivetrain of a motor vehicle, comprising at least one clutch assembly having at least one clutch, **characterized in that** an actuator according to at least one of Claims 1 to 4 is provided, which actuates the at least one clutch.

6. Method for providing an actuator, preferably for actuating a clutch, **characterized in that** a motor module (3) is connected by means of a motor flange (6) selectively to a hydraulics module (4) or to a mechanical module (5) in order to selectively form a hydraulic actuator (1) or a mechanical actuator (2) .

## Revendications

1. Actionneur pour l'actionnement d'un embrayage, un module de moteur (3) et un module d'actionnement (4, 5) étant inclus, **caractérisé en ce que** le module d'actionnement peut être un module mécanique (5) ou un module hydraulique (4), et le module de moteur (3) et le module d'actionnement (4, 5) présentent une bride de moteur (6) pour la connexion sélective l'un à l'autre, de telle sorte que le module de moteur (3) puisse être connecté de manière sélective au module hydraulique (4) ou au module mécanique (5).

2. Actionneur selon la revendication 1, **caractérisé en ce que** le module de moteur et/ou le module d'actionnement (4, 5) présentent au moins une bride de boîtier (8) pour la connexion à un boîtier.

3. Actionneur selon l'une quelconque des revendications précédentes, **caractérisé en ce que** le module de moteur (3) présente au moins une ouverture refermable pour recevoir un élément de capteur, de préférence un capteur de pression (7).

4. Actionneur selon la revendication 3, **caractérisé en ce que** l'ouverture refermable constitue un raccord électrique, le module de moteur présente au moins un élément de commutation, de préférence une platine et le raccord électrique peut établir une connexion entre l'élément de capteur et l'élément de commutation.

5. Chaîne cinématique d'un véhicule automobile, comprenant au moins un groupe d'embrayage avec au moins un embrayage, **caractérisé en ce qu'**un actionneur selon au moins l'une quelconque des revendications 1 à 4 est prévu, lequel actionne l'au moins un embrayage.

6. Procédé pour fournir un actionneur, de préférence pour l'actionnement d'un embrayage, **caractérisé en ce qu'**un module de moteur (3) au choix avec un module hydraulique (4) ou un module mécanique (5) est connecté par le biais d'une bride de moteur (6) de manière sélective à un actionneur hydraulique (1) ou un actionneur mécanique (2).
